(19) Europäisches Patentamt / European Patent Office / Office européen des brevets

(11) **EP 3 902 990 B1**

(12) # FASCICULE DE BREVET EUROPÉEN

(45) Date de publication et mention
de la délivrance du brevet:
**07.12.2022 Bulletin 2022/49**

(21) Numéro de dépôt: **19818176.0**

(22) Date de dépôt: **18.12.2019**

(51) Classification Internationale des Brevets (IPC):
*F02D 41/40* (2006.01)    *F01M 1/18* (2006.01)
*F01M 11/10* (2006.01)    *F02D 41/22* (2006.01)
*F01M 1/16* (2006.01)

(52) Classification Coopérative des Brevets (CPC):
**F02D 41/405; F01M 11/10; F02D 41/22;**
F01M 2001/165; F01M 2011/14; F02D 2200/0611;
F02D 2250/11; Y02T 10/40

(86) Numéro de dépôt international:
**PCT/EP2019/085837**

(87) Numéro de publication internationale:
**WO 2020/136047 (02.07.2020 Gazette 2020/27)**

(54) **PROCÉDÉ D'ESTIMATION DE LA DILUTION GLOBALE DE L'HUILE D'UN MOTEUR À COMBUSTION INTERNE**

VERFAHREN ZUR SCHÄTZUNG DER GESAMTVERDÜNNUNG DES ÖLS EINER BRENNKRAFTMASCHINE

METHOD FOR ESTIMATING THE OVERALL DILUTION OF THE OIL OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2018 FR 1874220**

(43) Date de publication de la demande:
**03.11.2021 Bulletin 2021/44**

(73) Titulaire: **Renault s.a.s**
**92100 Boulogne Billancourt (FR)**

(72) Inventeur: **PEYRARD, Benoit**
**91940 Les Ulis (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
| | |
|---|---|
| **EP-A2- 2 520 785** | **US-A1- 2004 099 252** |
| **US-A1- 2015 292 418** | **US-A1- 2016 274 073** |
| **US-A1- 2017 102 308** | **US-A1- 2018 299 375** |

**Description**

L'invention concerne un procédé d'estimation de la dilution globale de l'huile d'un moteur à combustion interne, plus particulièrement d'un moteur équipé d'un dispositif de traitement des émissions polluantes nécessitant des phases de traitement par post-injection de carburant dans les cylindres du moteur.

Par l'expression « dilution globale de l'huile », on entend la quantité (masse ou taux) des différentes espèces chimiques autres que celles qui composent l'huile proprement dite d'un moteur, et qui s'accumulent dans l'huile pendant le fonctionnement du moteur.

L'invention vise en particulier à fournir un procédé d'estimation du taux de dilution globale de l'huile moteur, suivi pendant l''intervalle entre deux vidanges de l'huile du moteur, permettant de vidanger l'huile moteur au meilleur moment, lorsqu'une valeur seuil de dilution de l'huile est atteinte.

L'intervalle de vidange de l'huile d'un moteur des véhicules est un critère écologique et économique très important. Il est déterminé en fonction de la vitesse de dégradation de l'huile moteur.

La plupart des moteurs modernes sont équipés de dispositifs de traitement des gaz d'échappement, qui fonctionnent de manière séquentielle, et qui bien souvent comprennent des phases de post-injection de carburant.

Par exemple dans le cas courant des moteurs diesel équipés d'un filtre à particules, en fonctionnement normal en mélange pauvre, ces dispositifs piègent les polluants mais ne les traitent pas. Périodiquement, lorsqu'un paramètre représentatif de la quantité de polluants accumulés, par exemple la chute de pression dans le dispositif sous un débit de gaz traversant donné, atteint une valeur prédéfinie, une phase dite de régénération est déclenchée par un calculateur du moteur, au cours de laquelle les réglages du moteur sont modifiés pour traiter et éliminer les polluants.

De manière connue, la régénération est généralement obtenue grâce à un apport de carburant dans le dispositif, par exemple par post-injection dans les cylindres du moteur. Des quantités de carburant sont injectées dans chaque cylindre assez longtemps après le point mort haut de combustion du cylindre pour qu'elles ne participent pas à la combustion. Ces quantités de carburant sont évacuées du moteur, lors du temps d'échappement du cylindre considéré, vers le dispositif de traitement des gaz pour le régénérer, c'est-à-dire pour le purger des polluants accumulés.

Toutefois, une fraction du carburant injecté lors des phases de régénération pénètre dans l'huile, notamment à travers les interstices entre le carter-cylindres et les pistons, et elle se dilue donc dans l'huile. La dilution du carburant dans l'huile, c'est-à-dire le taux de carburant contenu dans l'huile à chaque instant, augmente ainsi à chaque fois qu'une phase de régénération est déclenchée.

Ces modes de combustion sont donc très propices à la dilution du carburant dans l'huile moteur, et donc à la dégradation des propriétés de celle-ci. La mise sous contrôle de ce taux de dilution est essentielle pour déterminer l'intervalle de vidange de l'huile du moteur lorsqu'un seuil de dilution du carburant dans l'huile est atteint.

Dans les procédés d'estimation de la dilution de l'huile connus de l'état de la technique, on a assimilé la dilution de l'huile, ou plus précisément la dilution globale de l'huile, à la dilution du carburant dans l'huile. En d'autres termes, on a considéré jusqu'à maintenant que la seule espèce chimique diluée dans l'huile du moteur de manière significative était le carburant du moteur. Divers procédés d'estimation du taux de dilution de carburant dans l'huile d'un moteur par modélisation ont été mis au point.

On connaît, notamment par le document de brevet FR -A1- 2 974 853, un procédé d'estimation du taux de dilution de carburant dans l'huile d'un moteur à combustion interne équipé d'un tel dispositif de traitement des gaz de combustion nécessitant des phases de régénération par post-injection de carburant, par exemple un filtre à particules. Selon ce procédé de l'art antérieur, on estime le taux de dilution en fonction du mode de fonctionnement du moteur :

- lors d'une phase de régénération, la variation à la hausse de la dilution pendant un intervalle de temps considéré est calculée comme le produit d'une fonction de régénération par l'intervalle de temps considéré, cette fonction de régénération pouvant, par exemple, être cartographiée en fonction de paramètres du moteur tels que le régime et le débit de carburant,
- lors d'une phase de fonctionnement normal (autrement dit hors régénération), la variation à la baisse de la dilution pendant un intervalle de temps est calculée comme le produit de l'opposé d'une fonction d'évaporation par l'intervalle de temps considéré. Par évaporation, on entend la vaporisation du carburant dans les gaz environnant la nappe d'huile du moteur. La variation de l'évaporation entre deux instants voisins est calculée selon une loi cinétique d'ordre 1, en tenant compte du temps écoulé depuis la fin de la dernière régénération.

Dans la demande de brevet français ayant pour numéro de dépôt FR1850608, déposée le 25 janvier 2018 par la demanderesse, on propose un procédé d'estimation du taux de dilution de carburant dans l'huile d'un moteur plus précis que le précédent, qui améliore le modèle d'évaporation en prenant en compte différentes fractions plus ou moins volatiles du carburant. Cette demande de brevet propose d'estimer le taux de dilution de carburant dans l'huile par un procédé comprenant une étape de détermination d'une vitesse de dilution globale de carburant, qui se caractérise en ce qu'au cours d'une étape préalable du procédé, on définit une pluralité de fractions de composition du carburant, chaque fraction présentant une densité différente, et, d'une manière répétée pour une succession d'instants, une estimation du taux de dilution par addition du taux de dilution estimé à l'instant précédent avec une valeur de variation du taux de dilution, cette variation du taux de dilution étant calculée en fonction d'une estimation de la variation du taux de dilution, entre deux instants successifs, de chaque fraction de la pluralité de fractions de composition du carburant.

Bien que les différents modèles de dilution de carburant dans l'huile comme par exemple ceux cités précédemment soient maintenant assez satisfaisants, la demanderesse a constaté que les mesures de dilution globale de l'huile sont supérieures aux valeurs de la seule dilution du carburant dans l'huile qui sont prédites par les modèles. La corrélation du taux de dilution global ainsi modélisé avec les mesures de dilution n'est pas encore satisfaisante.

La demanderesse a en effet réalisé des analyses en laboratoire, notamment par mesure chromatographique en phase gazeuse, de manière à comparer le spectre de l'huile neuve au spectre de l'huile en cours de fonctionnement du moteur. De telles mesures permettent de déterminer la répartition de la longueur des chaînes carbonées des différentes espèces chimiques présentes dans l'huile, et d'en déduire par différence avec le spectre de l'huile neuve le ratio de chaînes carbonées courtes présentes dans l'huile et qui ne proviennent pas de l'huile neuve.

La demanderesse a alors constaté que le ratio total de chaînes carbonées courtes est significativement supérieur au ratio des seules chaînes carbonées courtes provenant de la dilution du carburant dans l'huile tel qu'il est déterminé par les modèles existants.

Cependant, avec de tels essais, il n'est pas possible de différencier les chaînes carbonées courtes provenant du carburant dilué dans l'huile d'autres chaînes carbonées courtes.

Selon la demanderesse, une part de la dilution de l'huile provient du fractionnement de ses propres composés à chaines carbonées. Sans vouloir être lié par une théorie, il semble que le carburant présent dans l'huile par effet de mélange accélère la décomposition d'hydrocarbures de l'huile, qui peut notamment s'expliquer par la présence de composés facilitant la génération de radicaux libres. Le carburant présent dans l'huile peut donc ainsi jouer le rôle de catalyseur dans la réaction de craquage de l'huile, et favoriser la conversion d'hydrocarbures à chaînes plus ou moins longues, notamment d'hydrocarbures saturés de l'huile, en hydrocarbures plus légers.

Comme les vidanges d'huile sont déclenchées lorsque la dilution estimée par modèle atteint un seuil, il y a un risque que la vidange soit déclenchée trop tard, quand les qualités lubrifiantes de l'huile sont plus dégradées qu'escompté, ce qui est néfaste à la fiabilité du moteur. Une solution est de prendre des marges de sécurité, mais ceci peut conduire à vidanger l'huile de moteur plus tôt que nécessaire et donc à augmenter inutilement son coût d'entretien.

Par ailleurs, l'évolution des normes, notamment européennes, relatives aux émissions de polluants, contraint à l'utilisation de plus en plus intensive de modes de combustions spécifiques aux traitements des polluants.

Il est par conséquent important que la stratégie de contrôle du seuil déclenchant une vidange de l'huile de moteur, fonction du mode de fonctionnement d'un moteur, qui est embarquée dans le calculateur du véhicule, soit améliorée.

L'invention vise ainsi à proposer un procédé d'estimation de la dilution globale d'une huile moteur à combustion interne équipé d'un dispositif de traitement des gaz de combustion nécessitant des phases de traitement par post-injection de carburant dans les cylindres du moteur qui soit plus proche de la réalité, c'est-à-dire le plus approchant des mesures de dilution en conditions réelles de fonctionnement d'un moteur.

L'invention propose à cet effet un procédé d'estimation du taux de dilution global d'une huile d'un moteur à combustion interne équipé d'un dispositif de traitement des gaz de combustion nécessitant des phases de traitement par post-injection de carburant, ledit procédé comprenant au moins une étape d'estimation du taux de dilution du carburant dans l'huile, c'est-à-dire propre à la dilution quantitative du carburant présent dans l'huile, ledit procédé se caractérisant en ce qu'en outre il comprend au moins une étape d'estimation du taux de dilution du fractionnement de composés carbonés de l'huile, c'est-à-dire de la dilution de l'huile par craquage fractionnant certains de ses composés à chaines carbonées, en fonction du taux de carburant introduit dans l'huile, le taux de dilution global de l'huile étant la somme d'au moins dudit taux de dilution du carburant dans l'huile et dudit taux de dilution dudit fractionnement de l'huile.

En particulier selon l'invention, le procédé comprend une étape d'estimation de la variation du taux de dilution dudit fractionnement de l'huile entre deux instants voisins, en fonction du taux de carburant introduit dans l'huile selon une loi cinétique d'ordre 1.

En particulier selon l'invention, ledit procédé peut comprendre une étape préalable de prédétermination d'une fonction liant la variation dudit taux de dilution par let fractionnement de l'huile au taux de carburant introduit dans l'huile, selon le mode de fonctionnement du moteur considéré. Cette détermination peut être graphique.

En particulier selon l'invention, la fonction liant la variation dudit taux de dilution par ledit fractionnement de l'huile au taux de carburant introduit dans l'huile est une fonction bornée dont la borne inférieure est égale à 0 et dont la borne supérieure dépend du mode de fonctionnement du moteur considéré.

Le procédé selon l'invention permet donc de préciser des procédés d'estimation de la dilution d'huile moteur existants en introduisant une étape d'estimation basée sur une modélisation prenant en compte les chaines courtes carbonées diluant l'huile qui proviennent du propre fractionnement (craquage) des molécules carbonées de l'huile en présence de carburant. Ce paramètre en fonction du taux de carburant introduit dans l'huile est d'ordre 1 sur ce phénomène de craquage et permet à lui seul une modélisation suffisamment précise et robuste du phénomène pour l'estimation de la dilution de l'huile par son propre fractionnement, au cours d'un intervalle de vidange.

Selon un cas particulier de l'invention, mais non exclusivement, ledit procédé peut comprendre des étapes de détermination du taux de dilution du carburant dans l'huile comme selon la demande de brevet FR 1850608 citée plus haut.

Parmi lesdites étapes de détermination du taux de dilution du carburant dans l'huile comme selon la demande de brevet FR1850608, ledit procédé comprend une étape de détermination d'une vitesse de dilution globale du carburant dans l'huile.

Au cours d'une étape préalable des étapes de détermination du taux de dilution du carburant dans l'huile, on définit une pluralité de fractions de composition dudit carburant, chaque fraction présentant une densité différente, c'est-à-dire une volatilité plus ou moins élevée, et le procédé comprend, de manière répétée pour une succession d'instants, une estimation du taux de dilution du carburant par addition du taux de dilution du carburant estimé à l'instant précédent avec une valeur de variation du taux de dilution du carburant; la valeur de variation du taux de dilution du carburant étant calculée en fonction d'une estimation de la dilution, entre deux instants successifs, de chaque fraction de la pluralité de fractions de composition dudit carburant dans l'huile.

Avantageusement et de manière non limitative, chaque fraction de composition est associée à un taux de composition du carburant et à une vitesse de vaporisation de ladite fraction, l'estimation de la dilution de chaque fraction étant fonction de la vitesse de dilution globale du carburant, du taux de composition du carburant et de ladite vitesse de vaporisation de ladite fraction.

Avantageusement et de manière non limitative, la vitesse de vaporisation de ladite fraction est fonction du couple moteur à l'instant considéré.

Préférentiellement et de manière non limitative, l'estimation de la variation du taux de dilution de chaque fraction entre deux instants successifs, est égale au produit de la vitesse de dilution globale du carburant avec le taux de composition du carburant auquel est soustrait la vitesse d'évaporation de ladite fraction, le tout multiplié par l'intervalle de temps entre les deux instants successifs.

Selon un cas particulier et de manière non limitative, le moteur est apte à fonctionner selon un mode de traitement avec post-injection de carburant, et en dehors dudit mode de traitement, ladite vitesse de dilution globale du carburant est égale à 0. Ainsi l'estimation du taux de dilution est encore plus simple à déterminer et procède d'un unique calcul commun aux deux modes de fonctionnement du moteur, avec et sans phase de traitement avec post-injection de carburant.

Selon un cas particulier et de manière non limitative, le moteur étant apte à fonctionner selon un mode de traitement avec post-injection de carburant, et lors dudit mode de traitement avec post-injection de carburant, ladite vitesse de dilution globale du carburant est prédéterminée en fonction du couple moteur et d'une valeur représentative de la température d'eau du moteur. Ainsi la vitesse de dilution globale du carburant peut être obtenue de manière relativement simple et fiable.

Avantageusement et de manière non limitative, la variation du taux de dilution du carburant à chaque instant est calculée comme la somme des estimations de la dilution de chaque fraction de la pluralité de fractions de composition dudit carburant dans l'huile. Ainsi, le procédé est relativement simple, fiable, et peu coûteux en temps de calcul.

L'invention concerne aussi un dispositif d'estimation du taux de dilution globale de l'huile d'un moteur à combustion interne équipé d'un dispositif de traitement des gaz de combustion nécessitant des phases de traitement par post-injection de carburant, selon lequel on estime le taux de dilution de carburant dans l'huile en fonction du mode de fonctionnement du moteur, ledit dispositif comprenant des moyens de détermination d'une vitesse de dilution globale du carburant.

De manière particulièrement avantageuse, ledit dispositif comprend des moyens de définition d'une pluralité de fractions de composition dudit carburant, chaque fraction présentant une densité différente.

En particulier, ledit dispositif comprend des moyens adaptés pour estimer, de manière répétée pour une succession d'instants, une estimation du taux de dilution du carburant dans l'huile par addition du taux de dilution du carburant estimé à l'instant précédent avec une valeur de variation du taux de dilution du carburant ; la valeur de variation du taux de dilution du carburant étant calculée en fonction d'une estimation de la variation du taux de dilution du carburant, entre deux instants successifs, de chaque fraction de la pluralité de fractions de composition dudit carburant dans l'huile, et ledit dispositif comprend des moyens adaptés pour estimer, de manière répétée pour une succession d'instants, une estimation du taux de dilution du fractionnement de l'huile par addition du taux de dilution du fractionnement de l'huile estimé à l'instant précédent avec une valeur de variation du taux de dilution du carburant, la valeur de variation du taux de dilution du fractionnement de l'huile étant calculée en fonction d'une estimation du taux de carburant introduit dans l'huile, et en outre ledit dispositif comprend des moyens adaptés pour additionner à chaque dit instant la valeur d'estimation du taux de dilution du carburant dans l'huile et la valeur d'estimation du taux de dilution du fractionnement de l'huile, et de comparer la somme obtenue à une valeur seuil d'alerte de vidange à effectuer.

L'invention concerne aussi un ensemble moteur comprenant un moteur à combustion interne équipé d'un dispositif de traitement des gaz de combustion nécessitant des phases de traitement par post-injection de carburant et d'un dispositif d'estimation tel que décrit précédemment.

L'invention concerne aussi un véhicule automobile comprenant un ensemble moteur automobile comprenant un moteur à combustion interne équipé d'un dispositif de traitement des gaz de combustion nécessitant des phases de traitement par post-injection de carburant dans les cylindres du moteur, et d'un dispositif d'estimation de dilution de l'huile moteur d'estimation tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés pour lesquels :

[Fig 1] représente schématiquement un moteur à combustion interne équipé d'un dispositif de traitement des gaz d'échappement, apte à la mise en oeuvre du procédé d'estimation du taux de dilution globale de l'huile selon l'invention ;
[Fig 2] représente des diagrammes comparatifs de la répartition des chaines carbonées d'une huile neuve et d'une huile stabilisée ;
[Fig 3] représente le logigramme du procédé d'estimation du taux de dilution globale de l'huile selon l'invention;
[Fig 4] représente des courbes de mesures d'une méthode d'évaluation de la fonction liant le taux de dilution de l'huile par son propre fractionnement en fonction du taux de carburant introduit dans l'huile;
[Fig 5] représente le logigramme détaillé d'un procédé d'estimation du taux de dilution total du carburant dans l'huile ;
[Fig 6] représente un logigramme d'estimation du procédé pour un taux de dilution globale de l'huile selon l'invention ;

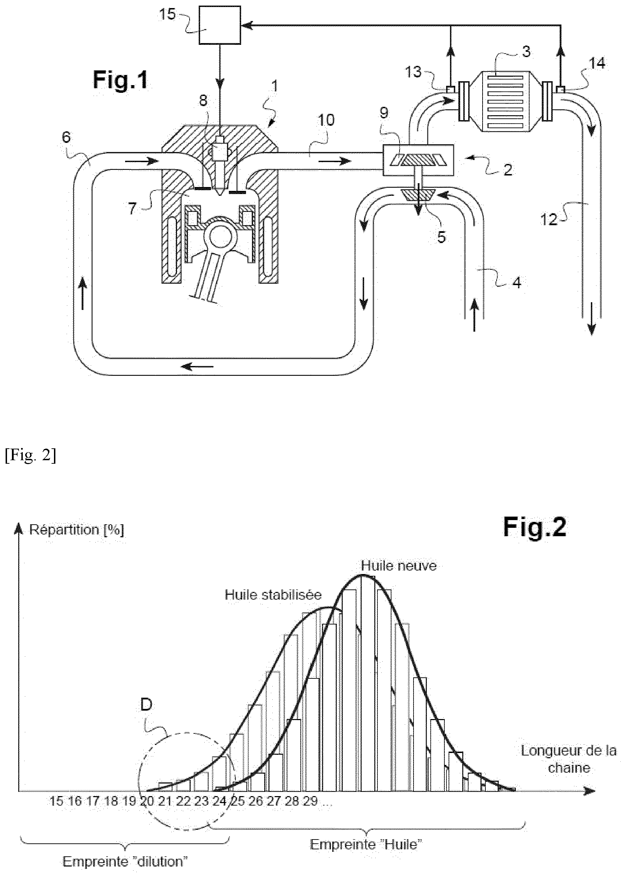

La figure 1 représente un moteur à combustion interne 1, par exemple un moteur diesel, dont un seul cylindre a été dessiné en coupe. Le moteur 1 est ici suralimenté par un turbocompresseur 2, et ses gaz d'échappement sont traités par un dispositif de traitement 3 des gaz d'échappement.

Le moteur 1 est alimenté en air par un circuit d'air comprenant une prise d'air 4, un compresseur 5 du turbocompresseur 2, et un conduit d'admission 6 dont une extrémité débouche dans une chambre de combustion 7 du moteur. La chambre 7 reçoit au moins un injecteur 8, qui injecte du carburant, par exemple du gazole, dans la chambre 7 pour sa combustion avec l'air.

Les gaz d'échappement produits par la combustion dans la chambre 7 sont évacués vers une turbine 9 du turbocompresseur 2 par l'intermédiaire d'un collecteur d'échappement 10. Les gaz traversent la turbine 9, un conduit d'échappement 11, et le dispositif de traitement 3. Ils sont finalement évacués vers l'atmosphère extérieure par un pot d'échappement 12.

Le dispositif de traitement 3 comprend par exemple, à l'intérieur d'une même enveloppe extérieure, un catalyseur d'oxydation qui oxyde de manière continue certains polluants (hydrocarbures imbrûlés HC et monoxyde de carbone CO) présents dans les gaz d'échappement, et un filtre à particules qui permet de stocker les suies émises par le moteur 1, et de les brûler quand une masse prédéterminée est atteinte. Deux capteurs de pression 13 et 14 sont implantés respectivement à l'entrée et à la sortie du dispositif de traitement 3. La chute de pression entre l'entrée et la sortie du dispositif de traitement 3 permet d'évaluer indirectement la masse de suies stockées dans le dispositif de traitement 3, plus précisément dans son filtre à particules.

De manière connue en soi, le fonctionnement du moteur 1 est piloté par un calculateur 15 relié à un certain nombre de capteurs, comprenant au moins les capteurs de pression 13 et 14, et à un certain nombre d'actionneurs, comprenant au moins l'injecteur 8.

En fonctionnement normal du moteur en mélange pauvre, c'est-à-dire en dehors des phases de régénération du filtre à particules, le calculateur 15 injecte dans la chambre de combustion 7 une quantité de carburant correspondant à une consigne de couple. Cette consigne peut être une fonction du régime de rotation du moteur et de l'enfoncement de la pédale d'accélérateur (non-représentée) du véhicule (non-représenté) sur lequel est monté le moteur 1. Le carburant commence généralement à être introduit avant le point mort haut de combustion de chaque cylindre du moteur 1, et il est entièrement brûlé. Dans ce mode de fonctionnement, le dispositif de traitement 3 stocke les suies émises par le moteur 1 mais ne les élimine pas.

Lorsque la différence de pression mesurée par les capteurs 13 et 14 atteint un seuil prédéterminé, le calculateur 15 déclenche une phase de régénération du dispositif de traitement 3 afin de brûler le stock de suies accumulées. A cet effet, en complément du carburant injecté dans la chambre 7 suivant la consigne de couple demandée, le calculateur 15 déclenche une post-injection de carburant.

Plus précisément, il injecte dans la chambre 7, assez longtemps après le point mort haut de chaque cylindre, une quantité de carburant qui ne participe pas à la combustion, c'est-à-dire qu'elle n'est pas brûlée pour produire un couple moteur. Cette quantité de carburant est évacuée presque en totalité dans le collecteur d'échappement 10, vers le dispositif de traitement 3 où elle brûle les suies qui y sont stockées.

Toutefois une petite partie du carburant injecté tardivement dans le cylindre pénètre et se dilue dans l'huile du moteur, notamment dans le film d'huile qui lubrifie les parois des cylindres du moteur 1, et à travers les interstices entre les pistons et les cylindres du moteur 1.

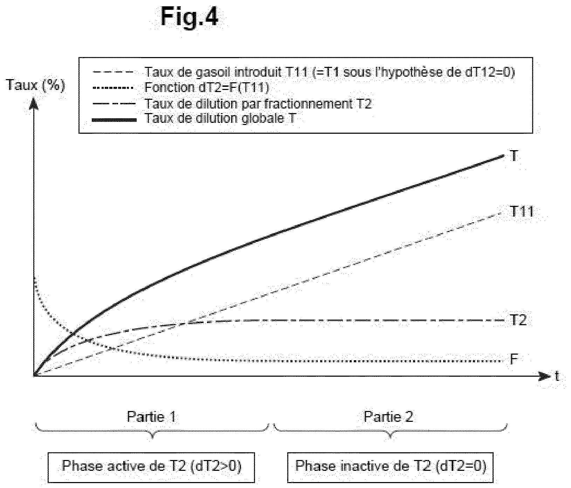

La figure 2 illustre la superposition de deux diagrammes comparatifs de la répartition des chaines carbonées, selon leur longueur, d'une huile neuve et d'une huile stabilisée, déterminés par chromatographie en phase gazeuse. L'huile stabilisée est une huile moteur dont certaines chaînes carbonées ont été fractionnées. Le phénomène de fractionnement est favorisé par la dilution de carburant dans l'huile.. Lors des essais, les inventeurs ont mis en évidence que le phénomène du propre fractionnement des composés à chaines carbonées de l'huile par effet de mélange avec le carburant, est important au début de l'introduction du carburant puis devient négligeable, comme expliqué plus loin en commentaires de la figure 4, l'huile étant alors considérée comme stabilisée par rapport à ce phénomène.

Le diagramme de l'huile stabilisée est décalé du diagramme de l'huile neuve vers les chaînes carbonées plus courtes comme indiqué par la zone D entourée sur la figure 2. Une comparaison avec le diagramme des chaines carbonées du carburant neuf (non représenté), qui comprend aussi des chaines carbonées plus courtes que celles de l'huile neuve, indique que cette dilution globale de l'huile ne provient pas seulement du carburant.

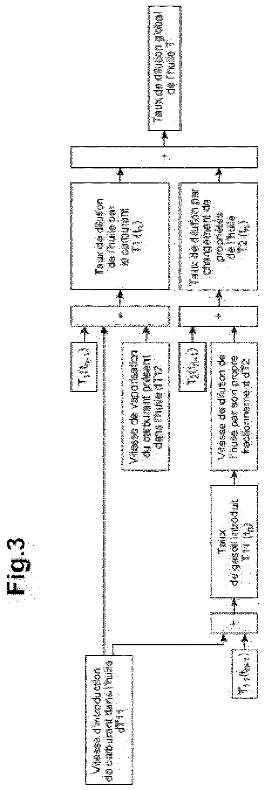

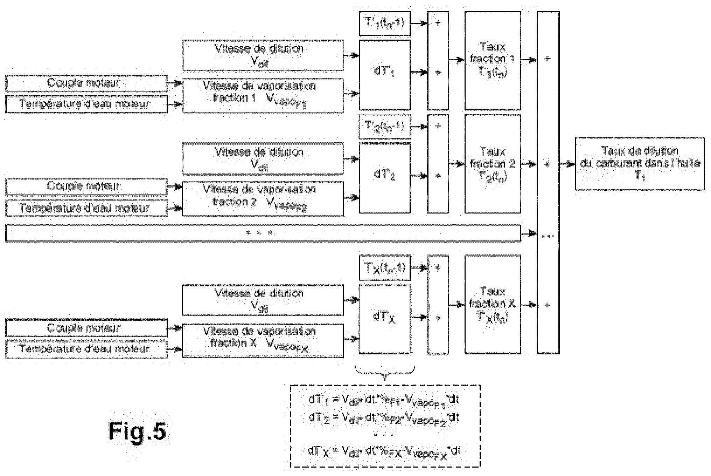

La figure 3 représente le logigramme du procédé d'estimation du taux de dilution globale de l'huile selon l'invention. Elle va être expliquée en liaison avec la figure 4, et la figure 5 qui illustre un exemple particulier, non limitatif de l'invention, de détermination du taux de dilution total du carburant dans l'huile T1.

Le logigramme représenté en figure 3, décrit l'assemblage entre le taux de dilution du carburant dans l'huile T1 et le taux de dilution dû au propre fractionnement de l'huile T2, entre deux instants successifs $t_{n-1}$ et $t_n$, soit pendant un pas de temps dt.

Autrement dit, l'écart de temps dt correspond, pour un instant donné, au temps qui s'est écoulé entre le calcul précédent t et le calcul actuel t+dt. Les calculs de variation de taux de dilution dT ou dT1 ou dT2, correspondent par conséquent aux variations entre les instants t et t+dt, séparés par cet écart de temps dt.

Selon l'invention, on estime le taux de dilution T2 du fractionnement de l'huile suivant un modèle de fractionnement (craquage) des composés à chaines carbonées de l'huile permettant d'incrémenter le taux de dilution du carburant T1 selon un profil fonction du cumul de la quantité de carburant introduite dans l'huile, pour obtenir le taux de dilution global de l'huile T.

La figure 4 illustre les résultats graphiques d'un essai spécifique, correspondant à une étape préalable permettant la prédétermination de la fonction F liant la variation du taux de dilution par fractionnement de l'huile au taux de carburant introduit dans l'huile pour un moteur donné. Le graphe représente divers taux mesurés ou calculés de l'évolution de la dilution de l'huile d'un moteur, par exemple du moteur diesel 1, et du taux de carburant T11 introduit dans l'huile au cours du temps. L'essai donne une méthode possible pour déterminer le taux de dilution du fractionnement de l'huile T2.

L'estimation du taux de dilution global de l'huile T est réalisée en estimant le taux de dilution dû au fractionnement de l'huile T2 selon l'invention, et le taux de dilution du carburant dans l'huile T1 selon un procédé connu en soi, en particulier qui s'incrémente via un modèle de dilution du carburant et se décrémente via un modèle de vaporisation du carburant (exemple en figure 5). Le taux de dilution global de l'huile T est la somme de ces deux taux T1 et T2.

Selon l'essai spécifique en relation avec la figure 4, le taux de dilution globale de l'huile (T) est mesuré par prélèvement de l'huile de moteur d'un véhicule mis en fonctionnement continu sur un temps long, de plusieurs heures. Par chromatographie en phase gazeuse, on détermine la quantité de chaines courtes formées dans l'huile au cours du temps (dans une zone similaire à la zone de dilution D de la figure 2). Au temps initial des mesures, le taux de dilution de l'huile est zéro (huile neuve).

Ledit essai spécifique sur véhicule est réalisé dans les conditions spécifiques suivantes :

- Vitesse d'introduction de carburant (ici du gasoil) dans l'huile (dT11/dt), notée par simplification dT11, constante ;
- Vitesse de vaporisation du carburant présent dans l'huile (dT12/dt) , notée par simplification dT12, nulle, en d'autres termes il n'y pas d'évaporation du carburant dans l'huile ;

Ces deux spécificités permettent d'obtenir que le taux de carburant introduit dans l'huile soit égal au taux de dilution du carburant dans l'huile, et soit égal à une constante (T11=T1= constante) .

Les analyses sont réalisées par chromatographie en phase gazeuse sur des échantillons d'huile prélevés régulièrement pendant l'essai, pour déterminer la quantité de chaines courtes formées dans l'huile au cours du temps. Ces analyses permettent de connaitre le taux de dilution global de l'huile T.

De ces essais, et selon la représentation en figure 4, on observe que la dilution globale de l'huile (taux T) en fonction du temps, et donc de la quantité de carburant introduit dans l'huile (T11), est un phénomène rapide non linéaire en première partie (partie 1), pour ensuite en deuxième partie (partie 2) évoluer plus lentement et linéairement.

On en déduit que le taux de dilution dû au fractionnement de l'huile T2 n'est actif que durant la première partie (partie 1) de l'essai (temps de « rodage » de l'huile : fractionnement des chaines carbonées « fragiles » (double liaisons C-C ...)), et devient négligeable en seconde partie (partie 2) pour aboutir à une huile stabilisée par rapport à ce phénomène de craquage.

La relation d'égalité entre la variation du taux de dilution du carburant dans l'huile et la vitesse d'introduction de carburant dans l'huile (dT1 = dT11) peut donc être déterminée sur la seconde partie de l'essai par mesure de la pente de la droite (partie 2) du taux de dilution global T.

Une fois que la variation du taux de dilution de carburant dans l'huile dT1 pendant le temps dt est connu (dT1 assimilable par simplification d'écriture à la vitesse de dilution de l'huile par le carburant), les analyses nous fournissant le taux de dilution global de l'huile T, la seule inconnue restante est la fonction « F » de la relation entre la vitesse de dilution de l'huile, par son propre fractionnement dT2/dt, notée dT2 par simplification, soit la variation du taux de dilution du fractionnement pendant un pas de temps dt, et le taux de carburant introduit dans l'huile T11, soit dT2 = F(T11), que l'on peut alors résoudre.

Comme indiqué plus haut, le phénomène de craquage de l'huile est important au départ, lors de l'introduction de carburant, puis devient négligeable, de sorte que l'on peut dire que la fonction F est une fonction bornée dont la borne inférieure est 0 et la borne supérieure est déterminée pour un fonctionnement de moteur donné, et d'huile le cas échéant.

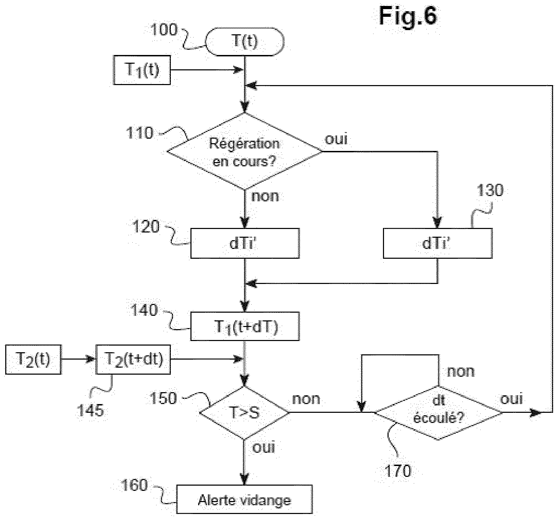

La figure 6 représente le logigramme d'un mode de réalisation du procédé selon l'invention.

Le procédé comprend une étape d'initialisation 100, lors de laquelle l'estimation du taux de dilution global T (en masse) est initialisée de préférence après une vidange, quand on vient de mettre de l'huile neuve, à une valeur nulle.

Comme indiqué plus haut, on estime le taux de dilution T2 du fractionnement de l'huile suivant un modèle de fractionnement de l'huile (craquage de composés carbonés de l'huile) permettant d'incrémenter le taux global de dilution du carburant T1, selon un profil fonction du cumul de la quantité de carburant introduite dans l'huile.

Selon l'exemple non limitatif, par simplification, l'instant « t » et le pas de temps « dt » sont ainsi les mêmes pour incrémenter le taux de dilution T2 du fractionnement de l'huile que ceux pour incrémenter le taux global de dilution T1 du carburant dans l'huile, mais ils pourraient être différents, le calculateur 15 étant aptes à gérer des temps différents d'incrémentation.

L'écart de temps dt, entre les deux instants successifs peut être égal à un pas de calcul classique du calculateur du moteur, par exemple environ 100 ms. Une telle fréquence de la mise à jour du calcul de la dilution est largement suffisante, l'évolution de la dilution de l'huile étant un phénomène assez lent.

Selon l'exemple, non limitatif du procédé, on peut estimer le taux de dilution T1 du carburant dans l'huile selon le procédé décrit dans la demande de brevet FR1850608 et qui est décrit en relation avec la figure 5.

Dans une étape préalable, a été définie une pluralité de fractions de composition dudit carburant, chaque fraction présentant une densité différente des autres, c'est-à-dire une légèreté différente.

Chaque fraction est associée à un taux de composition du carburant $\%F_1$, $\%_{F2}$,..., $\%_{Fx}$, de sorte que la somme de ces fractions corresponde à 100% du carburant.

Chaque fraction $F_1$, $F_2$, ... $F_x$, de carburant a aussi une vitesse de vaporisation propre $V_{vapoF1}$, $V_{vapoF2}$, ... $V_{vapoFx}$, cette vitesse étant d'autant plus élevée que la fraction est légère (ou moins dense).

En particulier, la prise en compte des quatre fractions principales, en termes de taux de composition du carburant, suffit à obtenir une modélisation satisfaisante du taux de dilution du carburant dans l'huile. Ceci permet en particulier de réduire de manière importante les calculs nécessaires tout en assurant une estimation satisfaisante. Cependant, il est parfaitement possible de prendre plus ou moins de fractions en compte selon les besoins de rapidité et/ou de précision.

La vitesse d'évaporation de chaque fraction $F_1$, $F_2$, ... $F_x$ est prédéterminée, ou cartographiée, à l'avance en fonction du couple moteur C.

Le procédé comprend une étape de test 110, au cours de laquelle le calculateur détermine si une régénération du dispositif de traitement 3 est en cours, par exemple en vérifiant la présence d'une post-injection de carburant. Le test oriente alors vers une étape 120 si aucune régénération n'est en cours, ou vers une étape 130 dans le cas contraire.

A l'étape 110, le calculateur incrémente et mémorise également dans un compteur le temps écoulé dt, autrement dit le pas de temps dt, ou l'écart de temps dt, depuis la fin du dernier calcul du taux global de dilution T de l'huile.

Les étapes 120 et 130 ont toutes les deux pour objectif de calculer une valeur de variation du taux de dilution du carburant dT1, dans le premier cas si la régénération est en cours, et dans l'autre cas si la régénération n'est pas en cours.

Dans le cas de l'étape 120, correspondant au mode de fonctionnement du moteur avec régénération activée, on calcule la valeur de variation du taux de dilution dT1 du carburant dans l'huile, aussi appelée dilution élémentaire totale du carburant dT1, comme étant la somme, pour chaque instant t, de la somme de dilutions élémentaire du carburant $dT'_1$, $dT'_2$,...,$dT'_x$ de la pluralité de fractions $F_1$, $F_2$, ... $F_x$ composant le carburant à chaque instant.

La dilution élémentaire du carburant $dT'_i$, correspondant au taux de variation de la dilution pour chaque fraction Fi du carburant dans l'huile, entre deux instants successifs t, t+dt ; est calculée selon l'équation suivante :

[Math 1]

$$dT'_i = V_{dil} * \%F_i * dt - V_{VapoFi} * dt$$

équation que l'on peut factoriser sous la forme :

[Math 2]

$$T'_i = (V_{dil} * \%F_i - V_{VapoFi})dt )$$

dans lesquelles :

$V_{dil}$ est une vitesse de dilution globale du carburant, pouvant être cartographiée en fonction de paramètres de moteur tels que le régime de rotation et le débit de carburant ;
$dt$ désigne l'écart de temps, ou pas de temps, entre deux instants successifs t, t+dt de calcul du taux global de dilution T1;
$\%F_i$ désigne le taux de composition du carburant de la fraction Fi; et
$V_{VapoFi}$ désigne la vitesse d'évaporation de la fraction Fi donnée.

La vitesse de dilution globale du carburant $V_{dil}$, dans le cadre du fonctionnement moteur en mode de régénération, est prédéterminée au moins en fonction du couple moteur et d'une valeur représentative de la température de l'eau qui caractérise le fonctionnement à froid ou classique à chaud du moteur.
Selon un premier mode de réalisation de l'invention, on calcule alors pour chaque fraction Fi, le taux de dilution T'i en ajoutant au taux de dilution T'i(t) de l'instant précédent l'estimation de la variation du taux dT1 pendant le pas de temps dt réalisée à l'étape 120 ou 130.
Le taux de dilution du carburant T1(t+dt), aussi écrit T1, pour l'instant suivant t+dt étant alors calculé comme la somme des taux de dilution de chaque fraction :

[Math 3]

$$T(t + dt) = \sum_{i=1}^{x} T'i(t + dt)$$

Selon un deuxième mode de réalisation, on calcule tout d'abord la dilution élémentaire totale du carburant dT1 à partir des dilutions élémentaires du carburant dT'i de chaque fraction Fi comme suit :

[Math 4]

$$dT1 = \sum_{i=1}^{x} dT'i$$

Puis on ajoute à l'étape 140 la variation du taux de dilution du carburant dT1 calculée à l'instant t, au taux de dilution du carburant T1(t) tel que calculé à l'instant précédent t, de sorte à obtenir le taux de dilution actuel du carburant T1(t+dt) pour l'instant t+dt.
Au cours de l'étape 130, dans le cas du mode de fonctionnement du moteur hors régénération, les étapes de calcul du taux de dilution du carburant T1(t+dt), aussi écrit simplement T1, sont identiques aux étapes effectuées lors du fonctionnement en mode de régénération, et peut aussi être effectué selon les deux modes de réalisation décrits précédemment, sauf qu'on considère alors que la valeur de vitesse de dilution globale du carburant $V_{dil}$ est nulle.
De sorte que l'équation Math1 pour le cas de l'étape 130 peut être écrite comme suit :

[Math 1]

$$dT'_i = -V_{VapoFi} * dt$$

Le procédé comprend en outre une étape 145 au cours de laquelle le taux de dilution du fractionnement de l'huile T2 est estimé au temps t+dt à partir des données prédéterminées pour la fonction F (figure 4).

Le procédé comprend ensuite une étape 150 au cours de laquelle le nouveau taux de dilution du fractionnement de l'huile T2(t+dt), est ajouté au nouveau taux de dilution T1(t+dt) du carburant dans l'huile, et cette somme de taux qui donne le nouveau taux de dilution global de l'huile T(t+dt), écrit aussi simplement T, est comparée à une valeur seuil S prédéterminée. Si ce taux de dilution global de l'huile T est supérieur audit seuil S, le procédé peut déclencher une alerte au tableau de bord du véhicule au cours d'une étape 160 du procédé, afin de prévenir le conducteur du véhicule qu'il est nécessaire de vidanger l'huile du moteur. Dans le cas contraire, on attend l'écoulement d'un pas de temps dt à l'étape 170, avant de procéder à un nouveau pas de calcul en reprenant les étapes précédentes.

Dans le cadre de l'exemple non limitatif de l'invention, on peut ainsi déterminer de manière fiable et rapide le taux de dilution global de l'huile d'un moteur, que ce moteur fonctionne en phase de régénération ou non.

On peut définir un logigramme optimisé d'estimation du taux de dilution global de l'huile T , pour lequel le taux de dilution du fractionnement de l'huile T2 est estimé en fonction de la proportion de carburant introduit dans l'huile T11, et aussi en introduisant des coefficients correctifs fonction d'autres paramètres moteurs identifiés comme influents et qui sont :

- un coefficient correctif C21 fonction « f » de la pression dans le carter d'huile et de la pression dans le circuit d'huile,
- un coefficient correctif C22 fonction « g » de la température de l'huile ,
- un coefficient correctif C23 fonction « h » du brassage de l'huile lié au régime du moteur, et du brassage de l'huile lié au cumul de tours moteur.

L'invention est décrite dans le cadre d'un exemple d'un véhicule avec un système de traitement des polluants utilisant un filtre à particules à régénérer, toutefois l'invention peut convenir avec d'autres dispositifs de traitement des émissions polluantes d'un moteur qui impliquent des post-injections de carburant sans toutefois utiliser de filtres à particules nécessitant de phases de régénération, mais qui entraînent néanmoins des infiltrations de carburant dans l'huile du moteur.

## Revendications

1. Procédé d'estimation du taux de dilution global (T) de l'huile d'un moteur (1) à combustion interne équipé d'un dispositif de traitement (3) des gaz de combustion nécessitant des phases de traitement par post-injection de carburant dans les cylindres du moteur, ledit procédé comprenant au moins une étape d'estimation du taux de dilution du carburant dans l'huile (T1), **caractérisé en ce qu'**il comprend en outre au moins une étape d'estimation du taux de dilution du fractionnement de composés carbonés de l'huile (T2) en fonction du taux de carburant introduit dans l'huile (T11), le taux de dilution global (T) de l'huile étant la somme d'au moins dudit taux de dilution du carburant dans l'huile (T1) et dudit taux de dilution dudit fractionnement de l'huile (T2).

2. Procédé d'estimation selon la revendication 1, **caractérisé en ce qu'**il comprend une étape d'estimation de la variation dudit taux de dilution par fractionnement de l'huile (dT2) entre deux instants voisins, en fonction du taux de carburant introduit dans l'huile (T11) selon une loi cinétique d'ordre 1.

3. Procédé d'estimation selon l'une des revendications 1 à 2, **caractérisé en ce qu'**il comprend une étape préalable de prédétermination d'une fonction (F) liant la variation dudit taux de dilution par ledit fractionnement de l'huile (dT2) au taux de carburant introduit dans l'huile (T11), selon le mode de fonctionnement du moteur considéré.

4. Procédé d'estimation selon l'une des revendications 2 à 3, **caractérisé en ce que** la fonction (F) liant la variation dudit taux de dilution par ledit fractionnement de l'huile (dT2) au taux de carburant introduit dans l'huile (T11) est une fonction bornée dont la borne inférieure est égale à 0 et dont la borne supérieure dépend du mode de fonctionnement du moteur considéré.

5. Procédé d'estimation selon l'une des revendications 1 à 4, **caractérisé en ce qu'**il comprend en une étape de détermination d'une vitesse de dilution globale du carburant (Vdil) dans l'huile.

6. Procédé d'estimation selon la revendication 5, **caractérisé en ce qu'**au cours d'une étape préalable des étapes de détermination du taux de dilution du carburant dans l'huile, on définit une pluralité de fractions (F1, F2, ... Fx) de composition dudit carburant, chaque fraction (Fi) présentant une densité différente, et **en ce que** le procédé comprend, de manière répétée pour une succession d'instants (t, t+dt), une estimation du taux de dilution du carburant (T1) par addition du taux de dilution du carburant (T1(t)) estimé à l'instant précédent avec une valeur de variation du taux de dilution (dT1), la valeur de variation du taux de dilution du carburant (dT1) étant calculée en fonction d'une estimation de la variation du taux de dilution (dT'i), entre deux instants successifs (t, t+dt), de chaque fraction (Fi) de la pluralité de fractions (F1, F2, ... Fx) de composition dudit carburant dans l'huile.

7. Procédé d'estimation selon la revendication 6, **caractérisé en ce que** chaque fraction (Fi) de composition est associée à un taux de composition (%Fi) du carburant et à une vitesse de vaporisation ($V_{VapFi}$) de ladite fraction (Fi), l'estimation de la dilution (T'i) de chaque fraction de carburant (Fi) étant fonction de la vitesse de dilution globale du carburant (Vdil), du taux de composition (%Fi) du carburant et de ladite vitesse de vaporisation ($V_{VapFi}$) de ladite fraction.

8. Procédé d'estimation selon la revendication 7, **caractérisé en ce que** la vitesse de vaporisation (VVapFi) de ladite fraction (Fi) est fonction du couple moteur (C) à l'instant (t) considéré.

9. Procédé d'estimation selon la revendication 7 ou 8, **caractérisé en ce que** l'estimation de la variation du taux de dilution (dT'i) de chaque fraction de carburant (Fi) entre deux instants successifs (t, t+dt) est égale au produit de la vitesse de dilution globale (Vdil) avec le taux (%Fi) de composition du carburant auquel est soustrait la vitesse de vaporisation (VvapFi) de ladite fraction (Fi), le tout multiplié par l'intervalle de temps (dt) entre les deux instants successifs.

10. Procédé d'estimation selon l'une quelconque des revendications 5 à 9, **caractérisé en ce que** la variation du taux de dilution total du carburant (dT1) à chaque instant (t, t+dt) est calculée comme la somme des estimations de variation du taux de dilution (dT'i) de chaque fraction (Fi) de la pluralité de fractions (F1, F2, ... Fx) de composition dudit carburant dans l'huile.

11. Dispositif d'estimation du taux de dilution global (T) de l'huile d'un moteur (1) à combustion interne équipé d'un dispositif de traitement (3) des gaz de combustion nécessitant des phases de traitement par post-injection de carburant dans les cylindres du moteur, selon lequel on estime le taux de dilution de carburant dans l'huile (T1) en fonction du mode de fonctionnement du moteur, **caractérisé en ce que** ledit dispositif comprend des moyens de détermination d'une vitesse de dilution globale du carburant dans l'huile (Vdil), et des moyens de définition d'une pluralité de fractions (F1, F2, ... Fx) de composition dudit carburant, chaque fraction (Fi) présentant une densité différente , et **en ce que** le dispositif comprend des moyens adaptés pour estimer, de manière répétée pour une succession d'instants (t, t+dt), une estimation du taux de dilution du carburant dans l'huile (T1) par addition du taux de dilution (T1(t)) estimé à l'instant précédent avec une valeur de variation du taux de dilution (dT1) , la valeur de variation du taux de dilution du carburant (dT1) étant calculée en fonction d'une estimation de la variation du taux de dilution (dT'i), entre deux instants successifs (t, t+dt), de chaque fraction (Fi) de la pluralité de fractions (F1, F2, ... Fx) de composition dudit carburant dans l'huile, et **en ce que** ledit dispositif comprend en outre des moyens adaptés pour estimer, de manière répétée pour une succession d'instants (t, t+dt), une estimation du taux de dilution du fractionnement de l'huile (T2) par addition du taux de dilution(T2(t)) estimé à l'instant précédent avec une valeur de variation du taux de dilution (dT2), la valeur de variation du taux de dilution du fractionnement de l'huile étant calculée en fonction d'une estimation du taux de carburant introduit dans l'huile (T11), et en outre ledit dispositif comprend des moyens adaptés pour additionner à chaque dit instant la valeur d'estimation du taux de dilution du carburant dans l'huile (T1) et la valeur d'estimation du taux de dilution du fractionnement de l'huile (t2), et de comparer la somme obtenue (T) à une valeur seuil (S) d'alerte de vidange à effectuer.

12. Véhicule automobile comprenant un moteur à combustion interne équipé d'un dispositif de traitement (3) des gaz de combustion nécessitant des phases de traitement par post-injection de carburant dans les cylindres du moteur, et d'un dispositif d'estimation du taux de dilution global de l'huile moteur (T) selon la revendication 11.

**Patentansprüche**

1. Verfahren zur Schätzung des Gesamtverdünnungsgrads (T) des Öls eines Verbrennungsmotors (1), der mit einer Vorrichtung zur Behandlung (3) der Abgase ausgerüstet ist, die Phasen der Behandlung durch Nacheinspritzung von Brennstoff in die Zylinder des Motors erfordern, wobei das Verfahren wenigstens einen Schritt des Schätzens des Verdünnungsgrads des Brennstoffs im Öl (T1) umfasst, **dadurch gekennzeichnet, dass** es ferner wenigstens einen Schritt des Schätzens des Verdünnungsgrads der Fraktionierung von Kohlenstoffverbindungen des Öls (T2) in Abhängigkeit vom Anteil von Brennstoff, der ins Öl eingebracht ist (T11), umfasst, wobei der Gesamtverdünnungsgrad (T) des Öls die Summe wenigstens des Verdünnungsgrads des Brennstoffs im Öl (T1) und des Verdünnungsgrads der Fraktionierung des Öls (T2) ist.

2. Schätzungsverfahren nach Anspruch 1, **dadurch gekennzeichnet, dass** es einen Schritt des Schätzens der Variation des Grads der Verdünnung durch Fraktionierung des Öls (dT2) zwischen zwei benachbarten Zeitpunkten in Abhängigkeit vom Anteil von Brennstoff, der ins Öl eingebracht ist (T11), gemäß einem kinetischen Gesetz 1. Ordnung umfasst.

3. Schätzungsverfahren nach einem der Ansprüche 1 bis 2, **dadurch gekennzeichnet, dass** es einen vorhergehenden Schritt des Vorbestimmens einer Funktion (F) umfasst, die die Variation des Grads der Verdünnung durch die Fraktionierung des Öls (dT2) mit dem Anteil von Brennstoff, der ins Öl eingebracht ist (T11), verbindet, je nach dem Betriebsmodus des betrachteten Motors.

4. Schätzungsverfahren nach einem der Ansprüche 2 bis 3, **dadurch gekennzeichnet, dass** die Funktion (F), die die Variation des Grads der Verdünnung durch die Fraktionierung des Öls (dT2) mit dem Anteil von Brennstoff, der ins Öl eingebracht ist (T11), verbindet, eine beschränkte Funktion ist, deren untere Beschränkung gleich 0 ist und deren obere Beschränkung vom Betriebsmodus des betrachteten Motors abhängt.

5. Schätzungsverfahren nach einem der Ansprüche 1 bis 4, **dadurch gekennzeichnet, dass** es einen Schritt des Bestimmens einer Gesamtverdünnungsgeschwindigkeit des Brennstoffs (Vdil) im Öl umfasst.

6. Schätzungsverfahren nach Anspruch 5, **dadurch gekennzeichnet, dass** im Verlauf eines vorhergehenden Schritts des Bestimmens des Verdünnungsgrads des Brennstoffs im Öl eine Mehrzahl von Zusammensetzungsfraktionen (F1, F2, ... Fx) des Brennstoffs definiert wird, wobei jede Fraktion (Fi) eine unterschiedliche Dichte aufweist, und dadurch, dass das Verfahren für eine Aufeinanderfolge von Zeitpunkten (t, t+dt) wiederholt ein Schätzen des Verdünnungsgrads des Brennstoffs (T1) durch Addition des zum vorhergehenden Zeitpunkt geschätzten Verdünnungsgrads des Brennstoffs (T1(t)) mit einem Variationswert des Verdünnungsgrads (dT1) umfasst, wobei der Variationswert des Verdünnungsgrads des Brennstoffs (dT1) in Abhängigkeit von einer Schätzung der Variation des Verdünnungsgrads (dT'i) zwischen zwei aufeinanderfolgenden Zeitpunkten (t, t+dt) jeder Fraktion (Fi) der Mehrzahl von Zusammensetzungsfraktionen (F1, F2, ... Fx) des Brennstoffs im Öl berechnet wird..

7. Schätzungsverfahren nach Anspruch 6, **dadurch gekennzeichnet, dass** jede Zusammensetzungsfraktion (Fi) einem Zusammensetzungsanteil (%Fi) des Brennstoffs und einer Verdampfungsgeschwindigkeit ($V_{VapFi}$) der Fraktion (Fi) zugeordnet ist, wobei die Schätzung der Verdünnung (T'i) jeder Brennstofffraktion (Fi) von der Gesamtverdünnungsgeschwindigkeit (Vdil), dem Zusammensetzungsanteil (%Fi) des Brennstoffs und der Verdampfungsgeschwindigkeit ($V_{VapFi}$) der Fraktion abhängig ist.

8. Schätzungsverfahren nach Anspruch 7, **dadurch gekennzeichnet, dass** die Verdampfungsgeschwindigkeit (WapFi) der Fraktion (Fi) vom Motordrehmoment (C) zum betrachteten Zeitpunkt (t) abhängig ist.

9. Schätzungsverfahren nach Anspruch 7 oder 8, **dadurch gekennzeichnet, dass** die Schätzung der Variation des Verdünnungsgrads (dT'i) jeder Brennstofffraktion (Fi) zwischen zwei aufeinanderfolgenden Zeitpunkten (t, t+dt) gleich dem Produkt der Gesamtverdünnungsgeschwindigkeit (Vdil) mit dem Zusammensetzungsanteil (%Fi) des Brennstoffs ist, von dem die Verdampfungsgeschwindigkeit (VvapFi) der Fraktion (Fi) subtrahiert wird, das Ganze multipliziert mit dem Zeitabstand (dt) zwischen den zwei aufeinanderfolgenden Zeitpunkten.

10. Schätzungsverfahren nach einem der Ansprüche 5 bis 9, **dadurch gekennzeichnet, dass** die Variation des Gesamtverdünnungsgrads des Brennstoffs (dT1) zu jedem Zeitpunkt (t, t+dt) als die Summe der Schätzungen der Variation des Verdünnungsgrads (dT'i) jeder Fraktion (Fi) der Mehrzahl von Zusammensetzungsfraktionen (F1, F2, ... Fx) des Brennstoffs im Öl berechnet wird.

11. Vorrichtung zur Schätzung des Gesamtverdünnungsgrads (T) des Öls eines Verbrennungsmotors (1), der mit einer Vorrichtung zur Behandlung (3) der Abgase ausgerüstet ist, die Phasen der Behandlung durch Nacheinspritzung von Brennstoff in die Zylinder des Motors erfordern, wobei der Verdünnungsgrad von Brennstoff im Öl (T1) in Abhängigkeit vom Betriebsmodus des Motors geschätzt wird, **dadurch gekennzeichnet, dass** die Vorrichtung Mittel zur Bestimmung einer Gesamtverdünnungsgeschwindigkeit des Brennstoffs im Öl (Vdil) und Mittel zur Definition einer Mehrzahl von Zusammensetzungsfraktionen (F1, F2, ... Fx) des Brennstoffs umfasst, wobei jede Fraktion (Fi) eine verschiedene Dichte aufweist, und dadurch, dass die Vorrichtung Mittel umfasst, die geeignet sind, für eine Aufeinanderfolge von Zeitpunkten (t, t+dt) wiederholt eine Schätzung des Verdünnungsgrads des Brennstoffs im Öl (T1) durch Addition des zum vorhergehenden Zeitpunkt geschätzten Verdünnungsgrads (T1(t)) mit einem Variationswert des Verdünnungsgrads (dT1) zu schätzen, wobei der Variationswert des Verdünnungsgrads des Brennstoffs (dT1) in Abhängigkeit von einer Schätzung der Variation des Verdünnungsgrads (dT'i) zwischen zwei aufeinanderfolgenden Zeitpunkten (t, t+dt) jeder Fraktion (Fi) der Mehrzahl von Zusammensetzungsfraktionen (F1, F2, ... Fx) des Brennstoffs im Öl berechnet wird, und dadurch, dass die Vorrichtung ferner Mittel umfasst, die geeignet sind, für eine Aufeinanderfolge von Zeitpunkten (t, t+dt) wiederholt eine Schätzung des Verdünnungsgrads der Fraktionierung des Öls (T2) durch Addition des zum vorhergehenden Zeitpunkt geschätzten Verdünnungsgrads (T2(t)) mit einem Variationswert des Verdünnungsgrads (dT2) zu schätzen, wobei der Variationswert des Verdünnungsgrads der Fraktionierung des Öls in Abhängigkeit von einer Schätzung des Anteils von Brennstoff, der ins Öl eingebracht ist (T11), berechnet wird, und ferner die Vorrichtung Mittel umfasst, die geeignet sind, jedem Zeitpunkt den Schätzwert des Verdünnungsgrads des Brennstoffs im Öl (T1) und den Schätzwert des Verdünnungsgrads der Fraktionierung des Öls (t2) hinzuzuaddieren und die erhaltene Summe (T) mit einem Alarmschwellenwert (S) für einen durchzuführenden Ölwechsel zu vergleichen.

12. Kraftfahrzeug umfassend einen Verbrennungsmotor, der mit einer Vorrichtung zur Behandlung (3) der Abgase, die Phasen der Behandlung durch Nacheinspritzung von Brennstoff in die Zylinder des Motors erfordern, und mit einer Vorrichtung zur Schätzung des Gesamtverdünnungsgrads des Motoröls (T) nach Anspruch 11 ausgerüstet ist.

## Claims

1. Method for estimating the overall dilution ratio (T) of the oil of an internal combustion engine (1) equipped with a combustion gas treatment device (3) requiring treatment phases by post-injection of fuel into the cylinders of the engine, said method comprising at least one step of estimation of the dilution ratio of the fuel in the oil (T1), **characterized in that** it further comprises at least one step of estimation of the dilution ratio of the fractioning of carbonated compounds of the oil (T2) as a function of the ratio of fuel introduced into the oil (T11), the overall dilution ratio (T) of the oil being the sum of at least said dilution ratio of the fuel in the oil (T1) and of said dilution ratio of said fractioning of the oil (T2).

2. Estimation method according to Claim 1, **characterized in that** it comprises a step of estimation of the variation of said dilution ratio by fractioning of the oil (dT2) between two adjacent instants, as a function of the ratio of fuel introduced into the oil (T11) according to a first order kinetic law.

3. Estimation method according to one of Claims 1 and 2, **characterized in that** it comprises a preliminary step of predetermination of a function (F) linking the variation of said dilution ratio by said fractioning of the oil (dT2) to the ratio of fuel introduced into the oil (T11), according to the mode of operation of the engine under consideration.

4. Estimation method according to one of Claims 2 and 3, **characterized in that** the function (F) linking the variation of said dilution ratio by said fractioning of the oil (dT2) to the ratio of fuel introduced into the oil (T11) is a bounded function of which the lower bound is equal to 0 and the upper bound depends on the mode of operation of the engine under consideration.

5. Estimation method according to one of Claims 1 to 4, **characterized in that** it comprises a step of determination of a rate of overall dilution of the fuel (Vdil) in the oil.

6. Estimation method according to Claim 5, **characterized in that**, in a preliminary step of the steps of determination of the dilution ratio of the fuel in the oil, a plurality of fractions (F1, F2, ... Fx) of composition of said fuel are defined, each fraction (Fi) having a different density, and **in that** the method comprises, repeatedly for a succession of instants (t, t+dt), an estimation of the dilution ratio of the fuel (T1) by addition of the dilution ratio of the fuel (T1(t)) estimated at the preceding instant with a value of variation of the dilution ratio (dT1), the value of valuation of the dilution ratio of the fuel (dT1) being calculated as a function of an estimation of the variation of the dilution ratio (dT'i), between two successive instants (t, t+dt), of each fraction (Fi) of the plurality of fractions (F1, F2, ... Fx) of composition of said fuel in the oil.

7. Estimation method according to Claim 6, **characterized in that** each fraction (Fi) of composition is associated with a composition ratio (%Fi) of the fuel and with a rate of evaporation ($V_{VapFi}$) of said fraction (Fi), the estimation of the dilution (T'i) of each fraction of fuel (Fi) being a function of the rate of overall dilution of the fuel (Vdil), of the composition ratio (%Fi) of the fuel and of said rate of evaporation ($V_{VapFi}$) of said fraction.

8. Estimation method according to Claim 7, **characterized in that** the rate of evaporation ($V_{VapFi}$) of said fraction (Fi) is a function of the engine torque (C) at the instant (t) under consideration.

9. Estimation method according to Claim 7 or 8, **characterized in that** the estimation of the variation of the dilution ratio (dT'i) of each fraction of fuel (Fi) between two successive instants (t, t+dt) is equal to the product of the rate of overall dilution (Vdil) with the composition ratio (%Fi) of the fuel from which is subtracted the rate of evaporation ($V_{VapFi}$) of said fraction (Fi), all multiplied by the time interval (dt) between the two successive instants.

10. Estimation method according to any one of Claims 5 to 9, **characterized in that** the variation of the total dilution ratio of the fuel (dT1) at each instant (t, t+dt) is calculated as the sum of the estimations of variation of the dilution ratio (dT'i) of each fraction (Fi) of the plurality of fractions (F1, F2, ... Fx) of composition of said fuel in the oil.

11. Device for estimating the overall dilution ratio (T) of the oil of an internal combustion engine (1) equipped with a combustion gas treatment device (3) requiring treatment phases by post-injection of fuel into the cylinders of the engine, according to which the dilution ratio of fuel in the oil (T1) is estimated as a function of the mode of operation of the engine, **characterized in that** said device comprises means for determining a rate of overall dilution of the fuel in the oil (Vdil), and means for defining a plurality of fractions (F1, F2, ... Fx) of composition of said fuel, each fraction (Fi) having a different density, and **in that** the device comprises means suitable for estimating, repeatedly for a succession of instants (t, t+dt), an estimation of the dilution ratio of the fuel in the oil (T1) by addition of the dilution ratio (T1(t)) estimated at the preceding instant with a value of variation of the dilution ratio (dT1), the value of variation of the dilution ratio of the fuel (dT1) being calculated as a function of an estimation of the variation of the dilution ratio (dT'i), between two successive instants (t, t+dt), of each fraction (Fi) of the plurality of fractions (F, F2, ... Fx) of composition of said fuel in the oil, and **in that** said device further comprises means suitable for estimating, repeatedly for a succession of instants (t, t+dt), an estimation of the dilution ratio of the fractioning of the oil (T2) by addition of the dilution ratio (T2(t)) estimated at the preceding instant with a value of variation of the dilution ratio (dT2), the value of variation of the dilution ratio of the fractioning of the oil being calculated as a function of an estimation of the ratio of fuel introduced into the oil (T11), and, furthermore, said device comprises means suitable for adding, at each said instant, the value of estimation of the dilution ratio of the fuel in the oil (T1) and the value of estimation of the dilution ratio of the fractioning of the oil (t2), and comparing the sum obtained (T) to an alert threshold value (S) for an oil change to be performed.

12. Motor vehicle comprising an internal combustion engine equipped with a combustion gas treatment device (3) requiring treatment phases by post-injection of fuel into the cylinders of the engine, and with a device for estimating the overall dilution ratio of the engine oil (T) according to Claim 11.

**Fig.1**

[Fig. 2]

Répartition [%]

**Fig.2**

Huile neuve

Huile stabilisée

D

Longueur de la chaine

15 16 17 18 19 20 21 22 23 24 25 26 27 28 29 ...

Empreinte "Huile"

Empreinte "dilution"

EP 3 902 990 B1

Fig.3

Vitesse d'introduction
de carburant dans l'huile
dT11

Taux
de gasoil introduit
T11 (t$_h$)

Vitesse de vaporisation
du carburant présent
dans l'huile dT12

Vitesse de dilution de
l'huile par son propre
fractionnement dT2

T$_{11}$(t$_{h-1}$)

T$_1$(t$_{h-1}$)

T$_2$(t$_{h-1}$)

Taux de dilution
de l'huile par
le carburant
T1 (t$_h$)

Taux de dilution par
changement de
propriétés
de l'huile
T2 (t$_h$)

Taux de dilution global
de l'huile T

15

# Fig.4

Taux (%)

- – – – Taux de gasoil introduit T11 (=T1 sous l'hypothèse de dT12=0)
- ·········· Fonction dT2=F(T11)
- – · – Taux de dilution par fractionnement T2
- —— Taux de dilution globale T

T

T11

T2

F

t

Partie 1

Partie 2

Phase active de T2 (dT2>0)

Phase inactive de T2 (dT2=0)

EP 3 902 990 B1

T'$_1$(t$_n$-1)

Vitesse de dilution V$_{dil}$

Couple moteur

Température d'eau moteur

Vitesse de vaporisation fraction 1  V$_{vapo_{F1}}$

dT$_1$

+

+

Taux fraction 1 T$_1$(t$_n$)

+

T'$_2$(t$_n$-1)

Vitesse de dilution V$_{dil}$

Couple moteur

Température d'eau moteur

Vitesse de vaporisation fraction 2  V$_{vapo_{F2}}$

dT$_2$

+

Taux fraction 2 T$_2$(t$_n$)

+

Taux de dilution du carburant dans l'huile T$_t$

. . .

. . .

T'$_X$(t$_n$-1)

Vitesse de dilution V$_{dil}$

Couple moteur

Température d'eau moteur

Vitesse de vaporisation fraction X  V$_{vapo_{FX}}$

dT$_X$

+

Taux fraction X T$_X$(t$_n$)

+

$$dT_1 = V_{dil} \cdot dt \cdot \%_{F1} - V_{vapo_{F1}} \cdot dt$$
$$dT_2 = V_{dil} \cdot dt \cdot \%_{F2} - V_{vapo_{F2}} \cdot dt$$
$$. . .$$
$$dT_X = V_{dil} \cdot dt \cdot \%_{FX} - V_{vapo_{FX}} \cdot dt$$

Fig.5

## Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2974853 A1

- FR 1850608